# EUROPEAN PATENT SPECIFICATION

(11) **EP 3 061 913 B1**
(45) Date of publication and mention of the grant of the patent: **05.06.2019**
(21) Application number: 16157740.8
(22) Date of filing: 26.02.2016
(51) Int. Cl.: F01D 5/18

(54) **GAS TURBINE ENGINE AIRFOIL COOLING CONFIGURATION WITH PRESSURE GRADIENT SEPARATORS**
GASTURBINENTRIEBWERKSSCHAUFEL-KÜHLKONFIGURATION MIT DRUCKGEFÄLLESEPARATOREN
CONFIGURATION DE REFROIDISSEMENT D'AUBE DE MOTEUR À TURBINE À GAZ AVEC SÉPARATEURS DE GRADIENT DE PRESSION

(30) Priority: 26.02.2015 US 201514632485
(43) Date of publication of application: 31.08.2016
(73) Proprietor: United Technologies Corporation, Farmington, CT 06032 (US)
(72) Inventor: QUACH, San, East Hartford, CT 06108 (US); WAITE, Ryan Alan, Glastonbury, CT 06033 (US); KING, Christopher, Bristol, CT 06010 (US); GAUTSCHI, Steven Bruce, Milton, MA 02186 (US)
(74) Representative: Dehns

(56) References cited:
- EP-A1- 2 942 485
- EP-A2- 2 568 119
- US-A- 5 176 499
- US-A- 5 511 946
- US-A1- 2004 151 586
- US-A1- 2005 281 671
- US-A1- 2014 147 287

## Description

### BACKGROUND

This disclosure relates to a gas turbine engine component, such as an airfoil. More particularly, the disclosure relates to a cooling configuration used to effectively turn the cooling fluid at two adjacent cooling fluid exits.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

Many blades and vanes, blade outer air seals, turbine platforms, and other components include internal cooling passages. Blade trailing edge tips are typically susceptible to high temperature damage such as thermal mechanical fatigue, and/or oxidation. Current airfoil designs tend to leave the trailing edge tip without convective cooling.

To address this concern, one example airfoil design adds flow features at the tip, which enables the entire trailing edge to be convectively cooled. Discrete slots or a large continuous slot is provided the length of the trailing edge all the way to the tip.

US 2005/0281671 A1 discloses a prior art airfoil in accordance with the preamble of claim 1.

EP 2 942 485 A1, which is prior art under Art 54(3) EPC, discloses a turbine blade with a cooled trailing edge tip corner.

US 5,176,499 discloses prior art photoetched cooling slots for diffusion bonded airfoils.

US 5,511,946 discloses a prior art airfoil tip corner.

US 2004/0151586 A1 discloses a prior art turbine blade.

US 2014/0147287 A1 discloses a prior art trailing edge and tip cooling.

EP 2 568 119 A2 discloses prior art gas turbine engines with improved trailing edge cooling arrangements.

### SUMMARY

According to the present invention, there is provided an airfoil as set forth in claim 1.

In a further embodiment of the above, the airfoil extends from the leading edge to the trailing edge in a chord-wise direction. The cavity is provided in at least the last 20% of the airfoil near the trailing edge in the chord-wise direction.

In a further embodiment of any of the above, the interior region includes a third pedestal group that interconnects the pressure and suction sidewalls.

In a further embodiment of any of the above, the first pedestal group is recessed from the trailing edge or extending to the trailing edge.

In a further embodiment of any of the above, the natural flow direction corresponds to an aft direction in the chord-wise direction.

In a further embodiment of any of the above, the desired flow direction corresponds to the radial direction.

In a further embodiment of any of the above, the first and second pedestals include first and second widths respectively. The first and second lengths are greater than their corresponding first and second widths.

In a further embodiment of any of the above, the first and second pedestals are in an alternating relationship with one another.

In a further embodiment of any of the above, least one first pedestal is arranged between adjacent second pedestals.

In a further embodiment of any of the above, the first length has a ratio relative to the first width of 1< L1/W1 < 20 and the second length has a ratio relative to the second width of 1< L2/W2 < 20.

In a further embodiment of any of the above, first and second edge are arranged at about 90° relative to one another.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 schematically illustrates a high turbine of the gas turbine engine shown in Figure 1.
Figure 3A is a perspective view of the airfoil having the disclosed cooling passage.
Figure 3B is a plan view of the airfoil illustrating directional references.
Figure 4 is a cross-sectional view of an example airfoil cooling configuration of an airfoil according to the present invention.
Figure 5A is an enlarged view of an airfoil cooling cavity with pedestals.
Figure 5B illustrates the flow through the cavity shown in Figure 5A.
Figure 6 shows a core used to make the cavity shown in Figures 4 and 5A in a partially broken view of the airfoil.
Figure 7 is a trailing edge view of the core extending from the airfoil.
Figure 8A is a partially broken airfoil illustrating a cooling configuration outside of the scope of the present invention.
Figure 8B is a cross-sectional view of the airfoil shown in Figure 8A taken along line 8B-8B.
Figure 9 shows a core used to make the cavity shown in Figures 8A and 8B.

### DETAILED DESCRIPTION

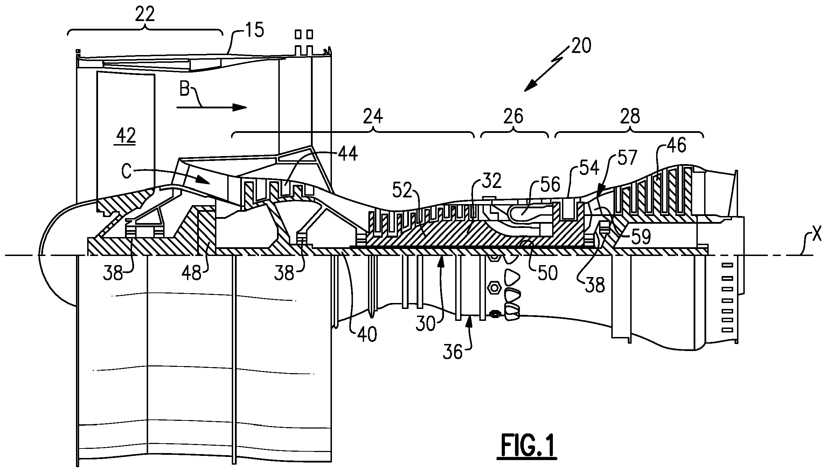

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct at least partially defined within a fan case 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

Moreover, although a commercial gas turbine engine embodiment is illustrated, it should be understood that the disclosed component cooling configuration can be used in other types of engines, such as military and/or industrial engines.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x ⁹/₅). The "Low corrected fan tip speed" as disclosed herein according to one non-limiting embodiment is less than about 1150 ft / second (350.5 meters/second).

The disclosed cooling configuration may be used in various gas turbine engine components. For exemplary purposes, a turbine blade 64 is described. It should be understood that the cooling passage may also be used in vanes, blade outer air seals, and combustor or exhaust liners, for example.

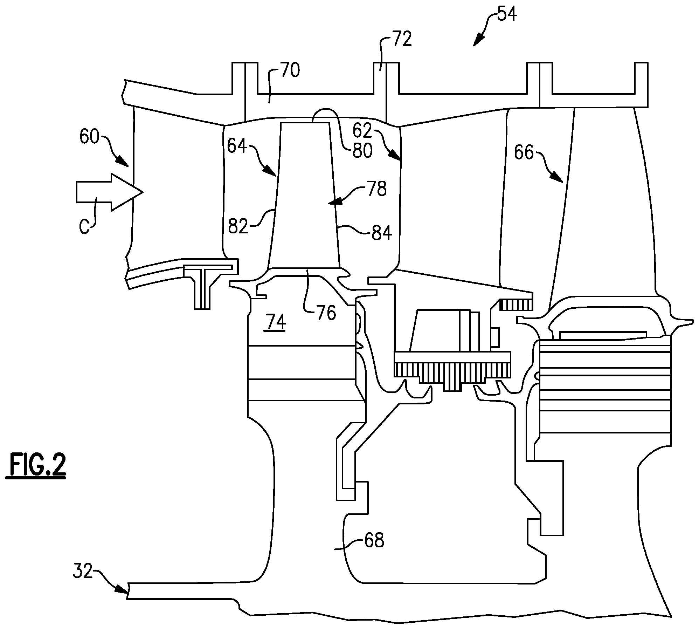

Referring to Figure 2, a cross-sectional view through a high pressure turbine section 54 is illustrated. In the example high pressure turbine section 54, first and second arrays of circumferentially spaced fixed vanes 60, 62 are axially spaced apart from one another. A first stage array of circumferentially spaced turbine blades 64, mounted to a rotor disk 68, is arranged axially between the first and second fixed vane arrays. A second stage array of circumferentially spaced turbine blades 66 is arranged aft of the second array of fixed vanes 62.

The turbine blades each include a tip 80 adjacent to a blade outer air seal 70 of a case structure 72. The first and second stage arrays of turbine vanes and first and second stage arrays of turbine blades are arranged within a core flow path C and are operatively connected to a spool 32.

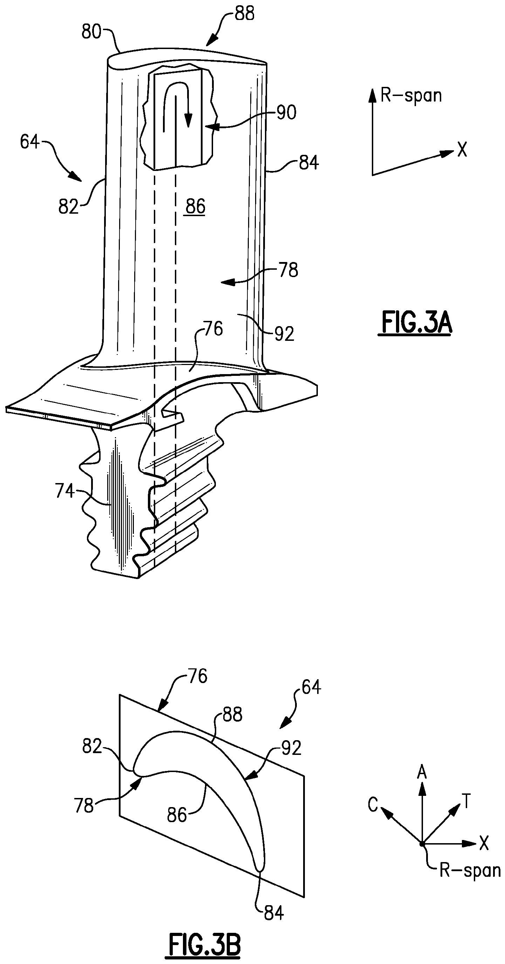

Referring to Figures 3A and 3B, a root 74 of each turbine blade 64 is mounted to the rotor disk. The turbine blade 64 includes a platform 76, which provides the inner flow path, supported by the root 74. An airfoil 78 extends in a radial direction R from the platform 76 to the tip 80. It should be understood that the turbine blades may be integrally formed with the rotor such that the roots are eliminated. In such a configuration, the platform is provided by the outer diameter of the rotor. The airfoil 78 provides leading and trailing edges 82, 84.

The airfoil 78 of Figure 3B somewhat schematically illustrates exterior airfoil surface 92 extending in a chord-wise direction H from a leading edge 82 to a trailing edge 84. The airfoil 78 is provided between pressure (typically concave) and suction (typically convex) side walls 86, 88 spaced apart in an airfoil thickness direction T, which is generally perpendicular to the chord-wise direction C, and joined at the leading and trailing edges 82, 84. Multiple turbine blades 64 are arranged circumferentially in a circumferential direction A. The airfoil 78 extends from the platform 76 in the radial direction R, or spanwise, to the tip 80.

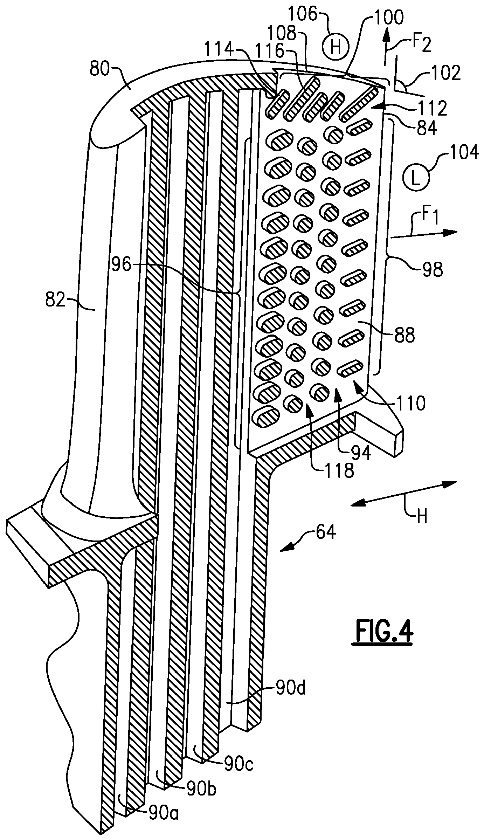

The airfoil 78 includes a cooling passage 90 provided between the pressure and suction walls 86, 88. The cooling passage 90 may be one or more discrete passages arranged in a configuration suitable for the given application. Referring to Figure 4, the cooling passage 90 is provided by passages 90a-90d. The exterior airfoil surface may include multiple film cooling holes (not shown) in fluid communication with the cooling passage 90.

With continuing reference to Figure 4, the cooling passage 90d feed a cavity 94 provided between the pressure and suction side walls 86, 88 near the trailing edge 84. In the example, the cavity 94 is provided in at least the last 20% of the airfoil 78 near the trailing edge 84 in the chord-wise direction H.

The cavity 94 includes an interior region 96 bounded by first and second exit regions 98, 100 arranged at angle relative to one another. The first exit region 98 is provided at the trailing edge 84, and the second exit region 100 is provided at a tip edge 108 of the tip 80. Thus, the fluid exit of the cavity 94 runs to the tip 80 to cool this hot corner of the airfoil. The tip 80 and the trailing edge 84 are arranged at an angle 102 in a range of 60°-120°, and in another example, about 90° relative to one another (90° +/- 5°).

The first and second exit regions 98, 100 are arranged respectively in low and high pressure regions 104, 106. The high pressure region 106 is at a greater pressure than the low pressure regions 104. A natural flow direction F1 extends from the interior region 96 to the first exit region 98, which corresponds to an aftward direction along the chord-wise direction H in the example blade. The "natural flow direction" is the direction the fluid would tend to flow from the component, here an airfoil, due to the various pressure gradients. A desired flow direction F2 extends from the interior region 96 to the second exit region 100 and generally corresponds to the radial direction R. The "desired flow direction" is a direction that is different than the natural flow direction. That is, the fluid would not flow substantially in the desired flow direction but for the first pedestals 114, discussed below, but would instead tend to flow in the natural flow direction.

Pedestals interconnect the pressure and suction side walls 86, 88. First and second pedestal groups 110, 112 are respectively arranged at the first and second exit regions 98, 100. In the example, the first pedestal group 110 includes a column of pedestals recessed from the trailing edge 84 and elongated in the chord-wise direction H. The first pedestal group 110 may extend all the way to the trailing edge 84, if desired. The second pedestal group 112 is recessed from the tip 80. Recessing the pedestals into the cavity 94 can avoid coat down issues when applying a thermal barrier coating to the exterior airfoil surface.

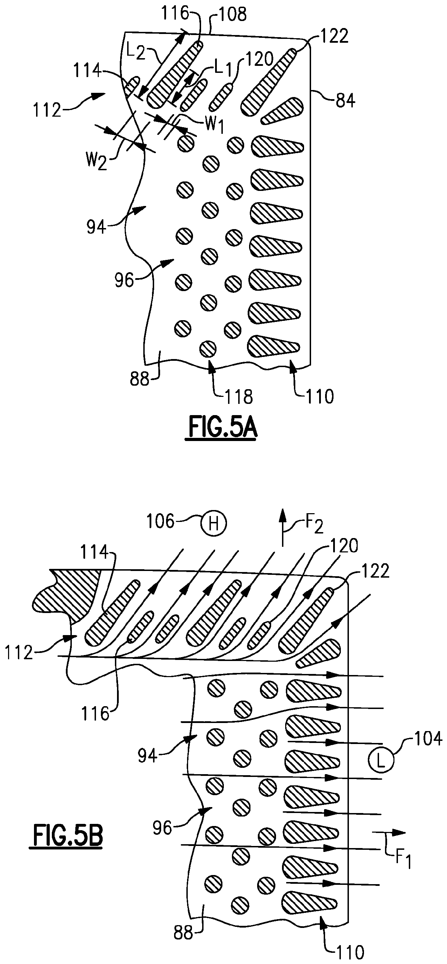

Referring to Figures 4, 5A and 5B, the second pedestal group 112 has first and second pedestals 114, 116 each terminating in an end 120, 122. The ends 122 of the second pedestals 116 extend beyond the ends 120 of first pedestals 114 in the desired flow direction F2. In the example, the elongated pedestals of the second pedestal group 112 are arranged an angle of about 30° to 75° relative to the elongated pedestals of the first pedestal group 110. The flow within the cavity 94 will not want to turn and flow out the tip 80. The longer second pedestals 116 prevent flow separation in the second exit region 100, which can result in cooling fluid being forced back into the cavity 94 and out the first exit region 98 due to the higher pressure at the high pressure region 106.

The first and second pedestals 114, 116 include first and second lengths L1, L2 respectively and first and second widths W1, W2 respectively. The first and second lengths L1, L2 are greater than their corresponding first and second widths W1, W2. In one embodiment, 1 < L1/W1 < 20 and 1 < L2/W2 < 20. The first and second pedestals 114, 116 are arranged in alternating relationship with one another. In the example, multiple first pedestals 114 are arranged between adjacent second pedestals 116.

The interior region 96 includes a third pedestal group 118 interconnecting the pressure and suction sidewalls 86, 88 to provide further structural stability and increased cooling to the trailing edge portion of the airfoil.

The longer second pedestals 116 act as "pressure gradient separators" that add to guide the flow through the cavity 94 and out the second exit region 100. Thus, the entire trailing edge tip can be cooled with minimal risk of flow separation and ingestion. By maintaining the continuous slot exit, it is less susceptible to coating deposition. There is internal convection throughout the entire trailing edge tip as well as adequate flow fill in the tip shelf, if one is used. Consequently, tip integrity is maintained and part life is improved. In addition, the blade would retain an improved aerodynamic efficiency over its life cycle.

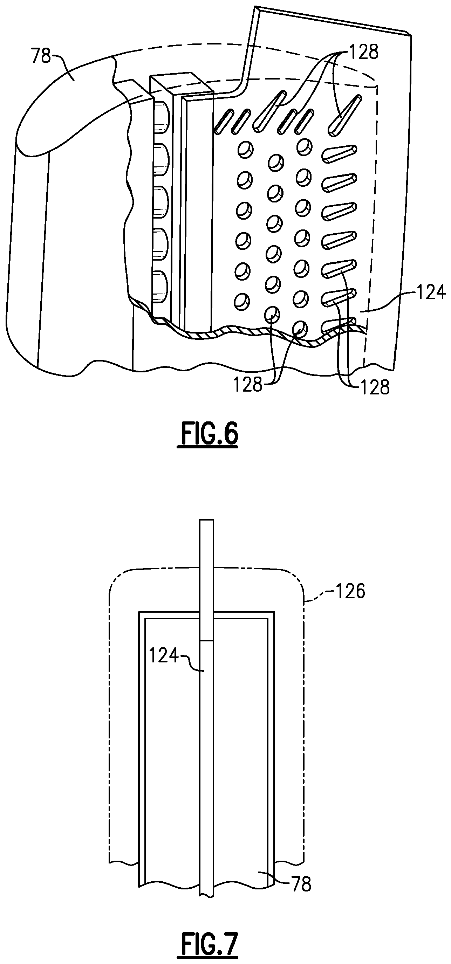

Figures 6 and 7 illustrate one approach to forming the pedestals in the cavity. A core 124 having holes 128 corresponding to the pedestal shapes is placed in a mold 126. The core 124 defines the shape of the cavity. The cooling cavity and pedestals can be formed by other manufacturing techniques, such as additive manufacturing, if desired.

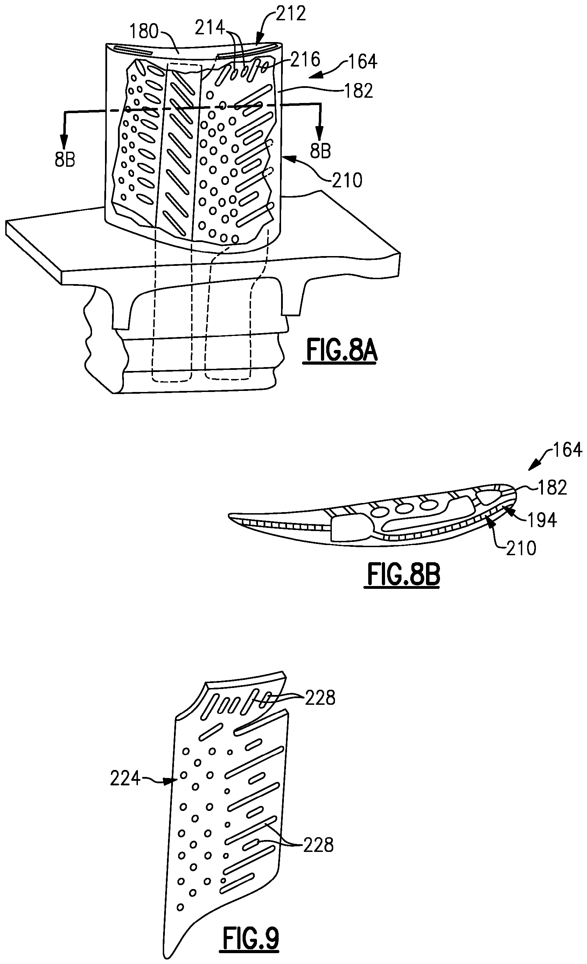

An arrangement outside of the scope of the present invention is shown in Figures 8A and 8B that illustrate the first and second pedestal groups 210, 212 in a cavity 194 near the leading edge 182 of the airfoil 164. In this example, the first and second pedestals 214, 216 are arranged near the tip 180. Figure 9 depicts a core 224 having holes 228 corresponding to the pedestal shapes in Figures 8A and 8B.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although example embodiments have been disclosed, a worker of ordinary skill in this art would recognize that certain modifications would come within the scope of the claims. For that and other reasons, the following claims should be studied to determine their true scope and content.

## Claims

1. An airfoil (78) for a gas turbine engine (20) comprising:
an airfoil (78) including spaced apart pressure and suction side walls (86, 88) joined at leading and trailing edges (82, 84) to provide an exterior airfoil surface extending in a radial direction (R) from a platform (76) to a tip (80);
a cooling cavity (94) provided between the pressure and suction side walls (86, 88) near the trailing edge (84), the cavity (94) includes an interior region (96) bounded by a first cooling fluid exit region (98) at the trailing edge (84) and a second cooling fluid exit region (100) at the tip (80), the first and second exit regions (98, 100) arranged at an angle (102) relative to one another, the first and second exit regions (98, 100) are respectively in low and high pressure regions (104, 106) relative to one another; and
first and second pedestal groups (110, 112) respectively arranged at the first and second exit regions (98, 100), the second pedestal group (112) has first and second elongated pedestals (114, 116) each terminating in an end (120, 122) wherein a natural flow direction (F₁) extends from the interior region (96) to the first exit region (98) in the low pressure region (104), and a desired flow direction (F₂) extends from the interior region (96) to the second exit region (100);
wherein the second pedestals (116) have a length (L₂) which is longer than a length (L₁) of the first pedestals (114) and the ends (122) of the second pedestals (116) extend beyond the ends (120) of the first pedestals (114) in the desired flow direction (F₂),
**characterised in that**:
the ends of the first and second pedestals (114, 116) are recessed from the tip (80) by first and second distances respectively and **in that** the first distance is greater than the second distance.

2. The airfoil (78) according to claim 1, wherein the airfoil (78) extends from the leading edge (82) to the trailing edge (84) in a chord-wise direction (H), the cavity (94) is provided in at least the last 20% of the airfoil (78) near the trailing edge (84) in the chord-wise direction (H).

3. The airfoil (78) according to claim 2, wherein the interior region (96) includes a third pedestal group (118) interconnecting the pressure and suction sidewalls (86, 88).

4. The airfoil (78) according to claim 1,2 or 3, wherein the first pedestal group (110) is recessed from the trailing edge (84).

5. The airfoil (78) according to claim 1,2 or 3, wherein the first pedestal group (110) extends to the trailing edge (84).

6. The airfoil (78) according to any preceding claim, wherein the natural flow direction (F1) corresponds to an aft direction in the chord-wise direction (H).

7. The airfoil (78) according to claim 6, wherein the desired flow direction (F₂) corresponds to the radial direction (R).

8. The airfoil (78) according to any preceding claim, wherein the first and second pedestals (114, 116) include first and second widths (W₁, W₂) respectively, the first and second lengths (L₁, L₂) greater than their corresponding first and second widths (W₁, W₂).

9. The airfoil (78) according to claim 8, wherein the first and second pedestals (114, 116) are in alternating relationship with one another.

10. The airfoil (78) according to claim 8 or 9, wherein the first length (L₁) has a ratio relative to the first width (W₁) of 1< L1/W1 < 20 and the second length (L₂) has a ratio relative to the second width (W₂) of 1< L2/W2 < 20.

11. The airfoil (78) according to any preceding claim, wherein tip (80) and trailing edge (84) are arranged at about 90° relative to one another.

12. The airfoil (78) according to any preceding claim, wherein at least one first pedestal (114) is arranged between adjacent second pedestals (116).

## Patentansprüche

1. Schaufel (78) für ein Gasturbinentriebwerk (20), das Folgendes umfasst:
eine Schaufel (78), die eine Druck- und eine Ansaugseitenwand (86, 88) einschließt, die voneinander beabstandet und an einer Vorder- und einer Hinterkante (82, 84) verbunden sind, um eine externe Schaufelfläche bereitzustellen, die sich in einer radialen Richtung (R) von einer Plattform (76) zu einer Spitze (80) erstreckt;
einen Kühlhohlraum (94), der zwischen der Druck- und der Ansaugseitenwand (86, 88) in der Nähe der Hinterkante (84) bereitgestellt ist, wobei der Hohlraum (94) eine innere Region (96) einschließt, die durch eine erste Kühlfluidausgangsregion (98) an der hinteren Kante (84) und eine zweite Kühlfluidausgangsregion (100) an der Spitze (80) begrenzt ist, wobei die erste und die zweite Ausgangsregion (98, 100) in einem Winkel (102) in Bezug aufeinander angeordnet sind, wobei die erste und die zweite Ausgangsregion (98, 100) jeweils in einer Nieder- und einer Hochdruckregion (104, 106) in Bezug zueinander liegen; und
eine erste und eine zweite Sockelgruppe (110, 112), die jeweils an der ersten und der zweiten Ausgangsregion (98, 100) angeordnet sind, wobei die zweite Sockelgruppe (112) einen ersten und einen zweiten verlängerten Sockel (114, 116) aufweist, die jeweils an einem Ende (120, 122) enden, wobei eine natürliche Strömungsrichtung (F₁) sich von der inneren Region (96) zu der ersten Ausgangsregion (98) in der Niederdruckregion (104) erstreckt und eine gewünschte Strömungsrichtung (F₂) sich von der inneren Region (96) zu der zweiten Ausgangsregion (100) erstreckt;
wobei die zweiten Sockel (116) eine Länge (L₂) aufweisen, welche länger ist als eine Länge (L₁) der ersten Sockel (114) und die Enden (122) der zweiten Sockel (116) sich über die Enden (120) der ersten Sockel (114) hinaus in die gewünschte Strömungsrichtung (F₂) erstrecken,
**dadurch gekennzeichnet, dass**:
die Enden der ersten und der zweiten Sockel (114, 116) gegenüber der Spitze (80) jeweils um einen ersten und einen zweiten Abstand zurückgesetzt sind, und dadurch, dass der erste Abstand größer ist als der zweite Abstand.

2. Schaufel (78) nach Anspruch 1, wobei die Schaufel (78) sich von der Vorderkante (82) zu der Hinterkante (84) in einer Sehnenrichtung (H) erstreckt, wobei der Hohlraum (94) in mindestens 20 % der Schaufel (78) in der Nähe der Hinterkante (84) in der Sehnenrichtung (H) bereitgestellt ist.

3. Schaufel (78) nach Anspruch 2, wobei die innere Region (96) eine dritte Sockelgruppe (118) einschließt, die die Druck- und die Ansaugseitenwand (86, 88) miteinander verbindet.

4. Schaufel (78) nach Anspruch 1, 2 oder 3, wobei die erste Sockelgruppe (110) gegenüber der Hinterkante (84) zurückgesetzt ist.

5. Schaufel (78) nach Anspruch 1, 2 oder 3, wobei die erste Sockelgruppe (110) sich zu der Hinterkante (84) erstreckt.

6. Schaufel (78) nach einem der vorhergehenden Ansprüche, wobei die natürliche Strömungsrichtung (F1) einer Rückwärtsrichtung in der Sehnenrichtung (H) entspricht.

7. Schaufel (78) nach Anspruch 6, wobei die gewünschte Strömungsrichtung (F₂) der radialen Richtung (R) entspricht.

8. Schaufel (78) nach einem der vorhergehenden Ansprüche, wobei die ersten und die zweiten Sockel (114, 116) jeweils eine erste und eine zweite Breite (W₁, W₂) einschließen, wobei die erste und die zweite Länge (L₁, L₂) größer als ihre entsprechende erste und zweite Breite (W₁, W₂).

9. Schaufel (78) nach Anspruch 8, wobei die ersten und die zweiten Sockel (114, 116) sich abwechseln.

10. Schaufel (78) nach Anspruch 8 oder 9, wobei die erste Länge (L₁) ein Verhältnis in Bezug auf die erste Breite (W₁) von 1<L1/W1<20 aufweist und die zweite Länge (L₂) ein Verhältnis in Bezug auf die zweite Breite (W₂) von 1<L2/W2<20 aufweist.

11. Schaufel (78) nach einem der vorhergehenden Ansprüche, wobei die Spitze (80) und die Hinterkante (84) um etwa 90° in Bezug aufeinander angeordnet sind.

12. Schaufel (78) nach einem der vorhergehenden Ansprüche, wobei mindestens ein erster Sockel (114) zwischen benachbarten zweiten Sockeln (116) angeordnet ist.

## Revendications

1. Aube (78) d'un moteur à turbine à gaz (20) comprenant :
une aube (78) comportant des parois latérales de pression et d'aspiration espacées (86, 88) assemblées au niveau de bords d'attaque et de fuite (82, 84) pour fournir une surface d'aube extérieure s'étendant dans une direction radiale (R) depuis une plateforme (76) jusqu'à une extrémité (80) ;
une cavité de refroidissement (94) prévue entre les parois latérales de pression et d'aspiration (86, 88) près du bord de fuite (84), la cavité (94) comporte une région intérieure (96) délimitée par une première région de sortie de fluide de refroidissement (98) au niveau du bord de fuite (84) et une seconde région de sortie de fluide de refroidissement (100) au niveau de l'extrémité (80), les première et seconde régions de sortie (98, 100) étant disposées selon un angle (102) l'une par rapport à l'autre, les première et seconde régions de sortie (98, 100) sont respectivement dans des régions basse pression et haute pression (104, 106) l'une par rapport à l'autre ; et
des premier et deuxième groupes de socles (110, 112) disposés respectivement au niveau des première et seconde régions de sortie (98, 100), le deuxième groupe de socles (112) comporte des premier et second socles allongés (114, 116) se terminant chacun par une extrémité (120, 122) dans laquelle une direction d'écoulement naturelle (F₁) s'étend de la région intérieure (96) à la première région de sortie (98) dans la région basse pression (104), et une direction d'écoulement souhaitée (F₂) s'étend de la région intérieure (96) à la seconde région de sortie (100) ;
dans laquelle les seconds socles (116) ont une longueur (L₂) supérieure à une longueur (L₁) des premiers socles (114) et les extrémités (122) des seconds socles (116) s'étendent au-delà des extrémités (120) des premiers socles (114) dans la direction d'écoulement souhaitée (F₂),
**caractérisée en ce que** :
les extrémités des premier et second socles (114, 116) sont en retrait par rapport à l'extrémité (80) par des première et seconde distances respectivement et **en ce que** la première distance est supérieure à la seconde distance.

2. Aube (78) selon la revendication 1, dans laquelle l'aube (78) s'étend du bord d'attaque (82) au bord de fuite (84) dans une direction de corde (H), la cavité (94) est prévue dans au moins les 20 % restants de l'aube (78) près du bord de fuite (84) dans la direction de corde (H).

3. Aube (78) selon la revendication 2, dans laquelle la région intérieure (96) comporte un troisième groupe de socles (118) interconnectant les parois latérales de pression et d'aspiration (86, 88).

4. Aube (78) selon la revendication 1, 2 ou 3, dans laquelle le premier groupe de socles (110) est en retrait par rapport au bord de fuite (84).

5. Aube (78) selon la revendication 1, 2 ou 3, dans laquelle le premier groupe de socles (110) s'étend jusqu'au bord de fuite (84).

6. Aube (78) selon une quelconque revendication précédente, dans laquelle la direction d'écoulement naturelle (F1) correspond à une direction arrière dans la direction de corde (H) .

7. Aube (78) selon la revendication 6, dans laquelle la direction d'écoulement souhaitée (F₂) correspond à la direction radiale (R).

8. Aube (78) selon une quelconque revendication précédente, dans laquelle les premier et second socles (114, 116) comportent des première et seconde largeurs (W₁, W₂) respectivement, les première et seconde longueurs (L₁, L₂) étant supérieures à leurs première et seconde largeurs correspondantes (W₁, W₂) .

9. Aube (78) selon la revendication 8, dans laquelle les premier et second socles (114, 116) sont dans une relation alternée entre eux.

10. Aube (78) selon la revendication 8 ou 9, dans laquelle la première longueur (L₁) a un rapport relatif à la première largeur (W₁) de 1<L1/W1<20 et la seconde longueur (L2) a un rapport relatif à la seconde largeur (W₂) de 1<L2/W2<20.

11. Aube (78) selon une quelconque revendication précédente, dans laquelle l'extrémité (80) et le bord de fuite (84) sont disposés à environ 90° l'un par rapport à l'autre.

12. Aube (78) selon une quelconque revendication précédente, dans laquelle au moins un premier socle (114) est disposé entre des seconds socles (116) adjacents.
